# EUROPEAN PATENT SPECIFICATION

(11) **EP 0 909 699 B1**
(45) Date of publication and mention of the grant of the patent: **17.07.2002**
(21) Application number: 99100804.6
(22) Date of filing: 02.08.1996
(51) Int. Cl.: B62M 3/00

(54) **Bolt**
Bolzen
Boulon

(30) Priority: 04.08.1995 JP 21983595; 08.02.1996 JP 4665796
(43) Date of publication of application: 21.04.1999
(62) Divisional of application: 96305711.2
(73) Proprietor: Shimano Inc., Osaka 590-8577 (JP)
(72) Inventor: Yamanaki, Masahiro c/o Shimano Inc., Sakai-shi, Osaka 590-8577 (JP)
(74) Representative: Cooper, John

(56) References cited:
- FR-A- 2 501 615
- FR-A- 2 587 965
- US-A- 1 138 956
- US-A- 1 389 997
- US-A- 2 446 846
- US-A- 3 352 190
- US-A- 3 408 092

## Description

### BACKGROUND OF THE INVENTION

The present invention is directed to a bolt used for the assembly of components, in particular for the assembly of a bicycle crank axle, a crank arm, and a crank set.

### SUMMARY OF THE INVENTION

In known bicycle crank axle, crank arm, and crank set arrangements, the components engage each other tightly so that it is necessary to use special removal tools to remove a crank arm from a crank axle.

The present invention discloses a novel bolt to increase ease of installation and removal of various tightly fitted bicycle components.

The bolt is used to fix a crank arm to a crank axle, and can be used in conjunction with special assembly tools.

According to a first aspect of the invention, the bolt includes a head, a threaded section having a diameter greater than or equal to the head, a flange disposed between the head and the threaded section, the flange having a diameter greater than the diameter of the threaded section; wherein the head defines a multiple-sided tool-engaging hole (as is known from FR-A-2587965); characterised in that the multiple-sided tool engaging hole extends axially into the threaded section to maximise the tool engaging surface. The crank axle mounting section of the crank arm preferably includes a stop ring or similar structure located so that the flange of the bolt is disposed between the stop ring and the first end of the axle body. As a result, the bolt flange presses the crank arm apart from the crank axle when the bolt is loosened.

Preferably, the bolt has a first end and a second end, the head being disposed at the first end and the threaded section 542 extending from the flange towards the second end.

Preferably also, the tool-engaging hole is open at the first end of the bolt and extends towards the second end.

Preferably also, the tool-engaging hole is closed by an end wall at the second end of the bolt.

Preferably, a part of a side wall of the tool-engaging hole defined by the threaded section has a thickness greater than a part of the side wall of the tool-engaging hole defined by the head.

A second aspect of the invention comprises the combination of a crank arm and a crank axle; characterised in that the crank arm is fixed to the crank axle by a bolt according to the first aspect of the invention.

A third aspect of the invention comprises the use of a bolt according to the first aspect of the invention for fixing a crank arm to a crank axle of a bicycle.

### BRIEF DESCRIPTION OF THE DRAWINGS

Figure 1 is a cross sectional view of right and left side crank arms attached to a crank axle.
Figure 2 is a cross sectional view illustrating a particular embodiment of a crank arm assembly according to the present invention including a bolt used to fix the crank arms to the crank axle;
Figure 3 is a partial cross sectional view of alternative embodiment of the bolt shown in Figure 2;
Figure 4 is an oblique view of the bolt shown in Figure 3;

### DETAILED DESCRIPTION OF THE EMBODIMENTS

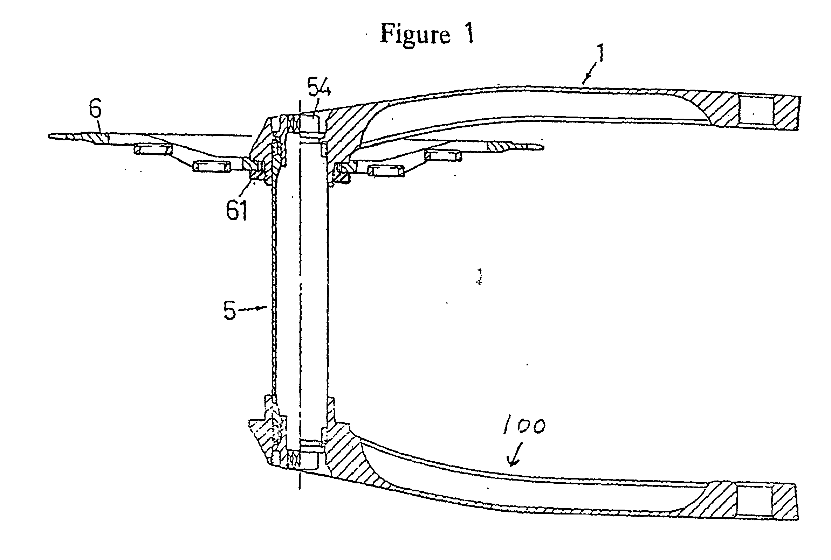

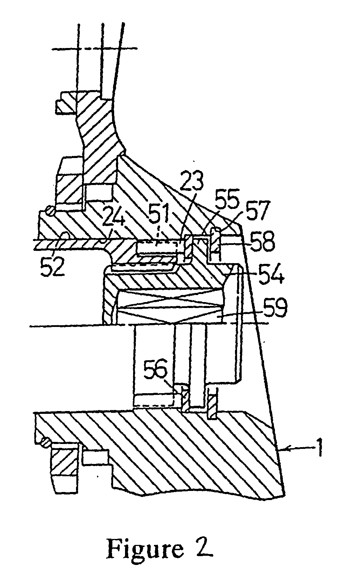

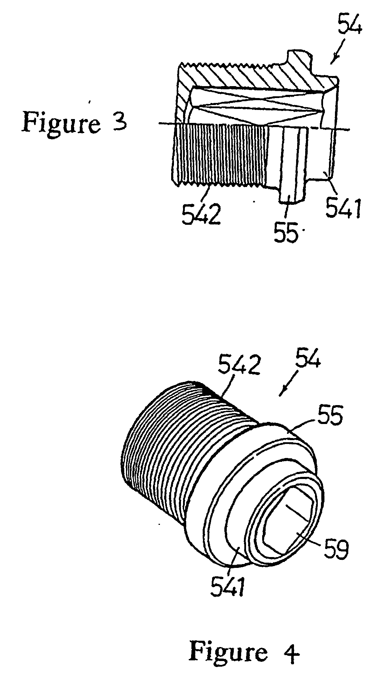

Figure 1 shows a bolt 54 in use with a crank axle 5, crank arms 1, 100, and chainring 6. The crank arm 1 to which the chainring 6 has been affixed is mounted onto one end of the crank axle 5 and affixed by the bolt 54.

The crank axle 5 and crank arms 1, 100 are provided with centering members with tapered junctions (not shown) which engage each other tightly, necessitating the use of removal tools to remove the crank arm 1, 100 from the crank axle 5.

However, the alternative embodiment depicted in Figure 2 is designed so that a bolt 54 that fastens the crank axle 5 and the crank arm 1 (or 100) can be used to release the components.

As shown in Figure 2, an integrated flange 55 is formed on the head of the bolt 54.

When fastening the crank axle 5 and the crank arm 1 together, a washer 56 is inserted and the bolt 54 is tightened. A stop ring 58 is inserted into and retained by a groove 57 located on the inside surface of the crank axle mounting hole 21. To remove the crank arm 1 from the crank axle, a hexagonal Allen key is inserted into the hexagonal hole 59 in the crank arm fixing bolt 54 and turned in the reverse direction. The flange 55 of the bolt 54 then pushes the side surface of the stop ring 58. The flange 55 thus forces the crank arm 1 in the axial direction, so the tight-fitting tapered junctions of the centring members 52 of the crank axle 5 and the centring members 24 of the crank arms 1 can be easily released. Thus, the need for a special tool such as an extractor is obviated.

Figure 3 is a partial cross sectional view of alternative embodiment of the bolt shown in Figure 2, and Figure 4 is an oblique view of the bolt shown in Figure 3. In the bolt 54 depicted in Figure 2, the diameter of the thread section and the diameter of the head are about the same, but in the bolt 54 depicted in Figure 3 and 4, the diameter of the thread section 542 is greater than the diameter of the head 541, and the diameter of the flange 55 is greater than the diameter of the thread section 542. The provision of a thread section 542 with a large diameter ensures sufficient strength on the part of the thread section even when the component is fabricated from a light alloy such as an aluminium alloy, and affords adequate tightening force on the part of the bolt 54.

A hexagonal hole 59 formed in the centre of the end of the head 541 extends in the direction of the bolt axis. The hexagonal hole 59 extends almost to the distal end of the bolt 54, such that its bottom surface is located in proximity to the end surface. A longer hexagonal hole 59 provides a greater area of contact between the tightening tool (an Allen key) and the hexagonal hole 59 so that adequate tightening can be achieved even with a light alloy bolt. The length of the hexagonal hole 59 can be chosen in accordance with the tightening force required, but it is necessary for the length to be at least such that the bottom surface of the hexagonal hole 59 extends to the inside surface of the thread section 542. The diameter of the thread section 542 is rather thick, so the hexagonal hole 59 can extend into its interior; it has adequate strength even when the hexagonal hole 59 is extended into its interior. When fabricated from an aluminium alloy, the bolt 54 has both light weight and adequate strength.

While the above is a description of various embodiments of the present invention, further modifications may be employed without departing from the scope of the present invention as defined in the appended claims.

For example, in the embodiment shown in Figure 2, a stop ring 58 was provided in crank arm 1. However, an integrated member which corresponds in function to the stop ring 58 may be formed on the crank arm 1 instead of the stop ring 58, or some other component may be welded on. Thus, the scope of the invention should not be limited by the specific structures disclosed. Instead, the true scope of the invention should be determined by the following claims. Of course, although labelling symbols are used in the claims in order to facilitate reference to the figures, the present invention is not intended to be limited to the constructions in the appended figures by such labelling.

## Claims

1. A bolt (54) comprising:
a head (541);
a threaded section (542) having a diameter greater than or equal to the head (541);
a flange (55) disposed between the head (541) and the threaded section (542), the flange (55) having a diameter greater than the diameter of the threaded section (542); and
wherein the head (541) defines a multiple-sided tool-engaging hole (59); **characterised in that**:
the multiple-sided tool-engaging hole (59) extends axially into the threaded section (542).

2. The bolt according to claim 1, wherein the bolt has a first end and a second end, the head (541) being disposed at the first end and the threaded section (542) extending from the flange (55) towards the second end.

3. The bolt according to claim 2, wherein the tool-engaging hole (59) is open at the first end of the bolt and extends towards the second end.

4. The bolt according to claim 3, wherein the tool-engaging hole (59) is closed by an end wall at the second end of the bolt.

5. The bolt according to any preceding claim, wherein a part of a side wall of the tool-engaging hole (59) defined by the threaded section (542) has a thickness greater than a part of the side wall of the tool-engaging hole (59) defined by the head (541).

6. The bolt according to any preceding claim, wherein the bolt is formed from a light alloy.

7. The bolt according to any preceding claim, wherein the bolt is formed from an aluminium alloy.

8. The combination of a crank arm (1) and a crank axle (5); **characterised in that** the crank arm (1) is fixed to the crank axle (5) by a bolt according to any one of claims 1 to 7.

9. Use of a bolt according to any one of claims 1 to 7 for fixing a crank arm (1) to a crank axle (5) of a bicycle.

## Patentansprüche

1. Ein Bolzen (54) bestehend aus:
einem Kopf (541);
einem Gewindeabschnitt (542) mit einem Durchmesser, der größer als der Kopf (541) ist oder diesem entspricht;
einem Flansch (55), der zwischen dem Kopf (541) und dem Gewindeabschnitt (542) angeordnet ist, wobei der Flansch (55) einen Durchmesser aufweist, der größer als der Durchmesser des Gewindeabschnitts (542) ist; und
wobei der Kopf (541) ein Instrument-eingreifendes Loch (59) mit mehreren Seiten festlegt; **dadurch gekennzeichnet, daß**:
sich das Instrument-eingreifende Loch (59) mit mehreren Seiten axial in den Gewindeabschnitt (542) erstreckt.

2. Bolzen gemäß Anspruch 1, wobei der Bolzen ein erstes Ende und ein zweites Ende aufweist, wobei der Kopf (541) an dem ersten Ende angeordnet ist und sich der Gewindeabschnitt (542) von dem Flansch (55) zu dem zweiten Ende erstreckt.

3. Bolzen gemäß Anspruch 2, wobei das Instrument-eingreifende Loch (59) an dem ersten Ende des Bolzen offen ist und sich zu dem zweiten Ende hin erstreckt.

4. Bolzen gemäß Anspruch 3, wobei das Instrument-eingreifende Loch (59) an dem zweiten Ende des Bolzens durch eine Endwand abgeschlossen ist.

5. Bolzen gemäß einem der vorhergehenden Ansprüche, wobei ein Teil einer Seitenwand des Instrument-eingreifenden Lochs (59), der durch den Gewindeabschnitt (542) festgelegt ist, eine größere Stärke aufweist als ein Teil der Seitenwand des Instrument-eingreifenden Lochs (59), der durch den Kopf (541) festgelegt ist.

6. Bolzen gemäß einem der vorhergehenden Ansprüche, wobei der Bolzen aus einem Leichtmetall geformt ist.

7. Bolzen gemäß einem der vorhergehenden Ansprüche, wobei der Bolzen aus einer Aluminiumlegierung geformt ist.

8. Die Kombination eines Kurbelarms (1) und einer Kurbelachse (5); **dadurch gekennzeichnet, daß** der Kurbelarm (1) durch einen Bolzen gemäß einem der Ansprüche 1 bis 7 an der Kurbelachse (5) befestigt ist.

9. Die Verwendung eines Bolzens gemäß einem der Ansprüche 1 bis 7 zur Befestigung eines Kurbelarms (1) an einer Kurbelachse (5) eines Fahrrads.

## Revendications

1. Un boulon (54) comprenant :
une tête (541) ;
une section filetée (542) présentant un diamètre supérieur ou égal à la tête (541) ;
un flasque (55) disposé entre la tête (541) et la section filetée (542), le flasque (55) présentant un diamètre supérieur au diamètre de la section filetée (542) ; et
dans lequel la tête (541) définit un trou d'engagement d'outil à faces multiples (59) ; **caractérisé en ce que** :
le trou d'engagement d'outil à faces multiples (59) s'étend axialement dans la section filetée (542).

2. Le boulon selon la revendication 1, dans lequel le boulon présente une première extrémité et une deuxième extrémité, la tête (541) étant disposée au niveau de la première extrémité et la section filetée (542) s'étendant du flasque (55) en direction de la deuxième extrémité.

3. Le boulon selon la revendication 2, dans lequel le trou d'engagement d'outil (59) est ouvert au niveau de la première extrémité du boulon et s'étend en direction de la deuxième extrémité.

4. Le boulon selon la revendication 3, dans lequel le trou d'engagement d'outil (59) est fermé par une paroi d'extrémité au niveau de la deuxième extrémité du boulon.

5. Le boulon selon n'importe quelle revendication précédente, dans lequel une partie d'une paroi latérale du trou d'engagement d'outil (59) définie par la section filetée (542) est de plus grande épaisseur qu'une partie de la paroi latérale du trou d'engagement d'outil (59) définie par la tête (541).

6. Le boulon selon n'importe quelle revendication précédente, dans lequel le boulon est formé à partir d'un alliage léger.

7. Le boulon selon n'importe quelle revendication précédente, dans lequel le boulon est formé à partir d'un alliage d'aluminium.

8. La combinaison d'un bras de manivelle (1) et d'un axe de manivelle (5) ; **caractérisée en ce que** le bras de manivelle (1) est fixé à l'axe de manivelle (5) par un boulon selon n'importe laquelle des revendications 1 à 7.

9. Utilisation d'un boulon selon n'importe laquelle des revendications 1 à 7 pour fixer un bras de manivelle (1) à un axe de manivelle (5) d'une bicyclette.
